(19) Europäisches Patentamt / European Patent Office / Office européen des brevets

(11) **EP 1 993 007 B1**

(12) **EUROPEAN PATENT SPECIFICATION**

(45) Date of publication and mention
of the grant of the patent:
**31.08.2011 Bulletin 2011/35**

(51) Int Cl.:
***G05B 13/02*** *(2006.01)*

(21) Application number: **07715218.9**

(22) Date of filing: **06.03.2007**

(86) International application number:
**PCT/JP2007/054250**

(87) International publication number:
**WO 2007/105527 (20.09.2007 Gazette 2007/38)**

(54) **CONTROL METHOD AND CONTROLLER OF POSITIONING MECHANISM**

STEUERVERFAHREN UND STEUERUNG EINES POSITIONIERUNGSMECHANISMUS

PROCEDE DE COMMANDE ET DISPOSITIF DE COMMANDE DE MECANISME DE POSITIONNEMENT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.03.2006 JP 2006060825**

(43) Date of publication of application:
**19.11.2008 Bulletin 2008/47**

(73) Proprietor: **National University Corporation Nagoya Institute of Technology
Showa-ku
Nagoya-shi
Aichi 466-8555 (JP)**

(72) Inventors:
  • **IWASAKI, Makoto
    Nagoya-shi Aichi 468-0011 (JP)**
  • **HIRAI, Hiromu
    Nagoya-shi Aichi 462-0846 (JP)**
  • **KAWAHUKU, Motohiro
    Iwakura-shi Aichi 482-0011 (JP)**
  • **MAEDA, Yoshihiro
    Nissin-shi Aichi 470-0126 (JP)**

(74) Representative: **Kramer - Barske - Schmidtchen
Landsberger Strasse 300
80687 München (DE)**

(56) References cited:
**JP-A- 09 282 008      JP-A- 10 283 034
JP-A- 2000 172 341      JP-A- 2003 076 425
JP-A- 2005 071 034**

• **MAKOTO IWASAKI ET AL: "2DOF Control-Based Fast and Precise Positioning Using Disturbance Observer" IEEE INDUSTRIAL ELECTRONICS, IECON 2006 - 32ND ANNUAL CONFERENCE ON, IEEE, PISCATAWAY, NJ, USA, 1 November 2006 (2006-11-01), pages 5234-5239, XP031077681 ISBN: 978-1-4244-0135-2**
• **MIRKIN L ET AL: "2dof controller parametrization for systems with a single i/o delay" IEEE TRANSACTIONS ON AUTOMATIC CONTROL, IEEE SERVICE CENTER, LOS ALAMITOS, CA, US LNKD- DOI:10.1109/TAC.2003.819286, vol. 48, no. 11, 1 November 2003 (2003-11-01), pages 1999-2004, XP011103521 ISSN: 0018-9286**
• **ITOH K ET AL: "Robust fast and precise positioning of ball screw-driven table system on machine stand" ADVANCED MOTION CONTROL, 2004 8TH IEEE INTERNATIONAL WORKSHOP ON. AMC KAWASAKI, JAPAN MARCH 25-28, 2004, PISCATAWAY, NJ, USA,IEEE LNKD- DOI: 10.1109/AMC.2004.1297921, 25 March 2004 (2004-03-25), pages 511-515, XP010705763 ISBN: 978-0-7803-8300-5**

## Description

Technical Field

The present invention relates a control method and a controller of a positioning mechanism which can prevent deterioration in control performance due to an estimation delay of a state estimator and achieve friction compensation by properly giving an initial value of the state estimator based on a precise mathematical model of rolling friction, in the positioning mechanisms of various kinds of industrial machinery in which rolling friction is applied to bearings and guide ways.

Background Art

In positioning mechanisms used for mechatronics equipment typified by industrial robots and various kinds of machine tools, higher precision has been achieved in addition to higher speeds in response to electronic equipment with smaller sizes and higher densities. In view of higher positioning accuracy of the future, as has been experienced in mechanisms such as a stepper requiring ultraprecision positioning, control system designs which are devised in consideration of the influence of nonlinear spring characteristics of rolling friction on positioning are necessary, the rolling friction existing on various bearings and feed guiding systems. The present inventor has conducted precise modeling of actual devices while focusing particularly on nonlinear friction modeling, regarding test positioning mechanisms based on industrial robot handlers, printed board testers, and so on. The present inventor has conducted rolling friction modeling in consideration of nonlinear spring characteristics resulted from elastic deformation of a rolling element, achieved a high-precision simulator, and clarified the significance of friction compensation in high-speed and high-precision positioning (Non-Patent Document 1).

Friction compensation using a state estimator is effective at obtaining improved disturbance suppression characteristics as compared with PID control and the like. However, transient characteristics resulted from a response bandwidth of a low-pass filter which is essentially necessary for the state estimator causes a disturbance estimation delay. This influence is apparent at the start of the operation of a positioning mechanism and deteriorate the tracking accuracy of a motor. In the prior art, such an estimation delay has been compensated by, for example, forcibly applying a static friction torque as described in Patent Document 1.

Patent Document 1: Japanese Patent Laid-Open No. 8-286759
Non-Patent Document 1: "Improvement in positioning/settling accuracy by suppressing disturbance" Maeda, Kawafuku, Iwasaki, Hirai, paper of The Institute of Electrical Engineers of Japan, IIC-05-55, pp.91-96(2005)

Friction compensation performed by a state estimator of the prior art is effective at obtaining improved disturbance suppression characteristics as compared with PID control and the like. However, transient characteristics resulted from a response bandwidth of a low-pass filter causes a disturbance estimation delay and thus control performance deteriorates, so that desired control performance cannot be satisfied.

Further, disturbance estimation is delayed from the start because of a dead time component in a control object or a sample delay in the state estimator, so that control performance deteriorates and desired control performance cannot be satisfied.

The present invention has been devised in view of the circumstances of the prior art. An object of the present invention is to provide a high-speed, high-precision and low-dispersion control method and controller of a positioning mechanism which can effectively prevent deterioration in control performance due to a friction estimation delay of a state estimator.

Disclosure of the Invention

In order to attain the object, a control method of a positioning mechanism according to claim 1 is provided.

In the present invention, at the start of the positioning mechanism in which an effective friction estimation value cannot be obtained by the state estimator, the output of the state estimator is created by the friction estimation value obtained from the dynamic characteristics model of rolling friction and then the process shifts to, when the estimation delay is sufficiently eliminated, friction compensation control using a typical state estimator. Thus it is possible to prevent degradation in control performance due to a friction estimation delay and achieve high-speed, high-precision, and low-dispersion positioning control.

A controller of a positioning mechanism according to claim 2 is provided.

Bang-Bang compensation of forcibly applying a constant friction compensation torque according to the prior art causes dispersion in control response, whereas in the control method and controller of the positioning mechanism according to the present invention, it is possible to effectively prevent deterioration in control performance due to a friction estimation delay of the state estimator, thereby achieving high-speed, high-precision and low-dispersion positioning control.

Best Mode for Carrying Out the Invention

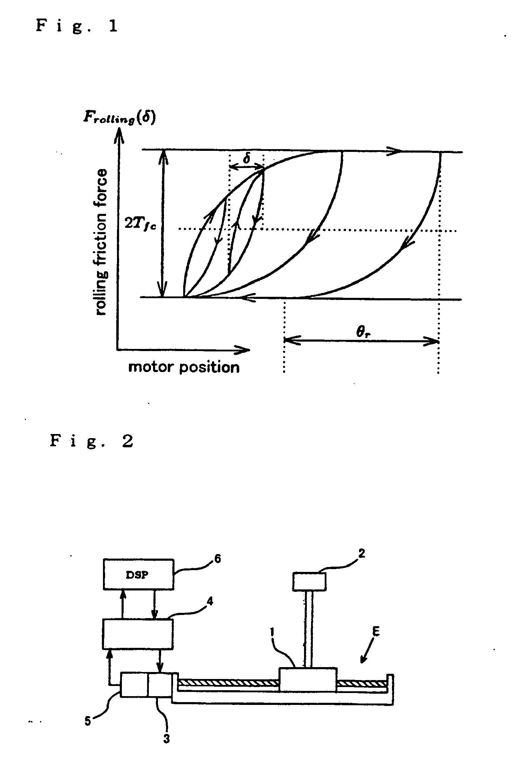

It is known that rolling friction is friction generated by a rolling element existing in a ball screw or a table linear guide and exerts nonlinear spring characteristics by elastic deformation in a micro-displacement region. Figure 1 shows a precise mathematical model expressing the nonlinear spring characteristics of rolling friction. In Figure 1, Frolling ($\delta$) is a rolling friction force and $\theta$r is a non-stable displacement region. Rolling friction has the "non-stable displacement region" ($\theta$r) where a rolling element does not perfectly roll and the nonlinear spring characteristics are exerted by the influence of elastic deformation and has a "rolling region" where the rolling element rolls. A reciprocating motion in the "non-stable displacement region" ($\theta$r) forms a hysteresis loop. The shape of hysteresis is constant regardless of a distance of travel and the initial position, and the hysteresis has the same area and shape at any position through a reciprocating motion as long as a rolling start distance remains the same. According to the foregoing characteristics, a rolling friction model is expressed by the following equations (1) to (3) including a Coulomb friction.
$$g(\xi) = \begin{cases} \frac{1}{2-n}\left(\xi^{n-1} - (n-1)\xi\right) : n \neq 2 \\ \xi(1-\ln\xi) : n = 2 \end{cases} \qquad \cdots\cdots\cdots (1)$$

$$F_{rolling}(\delta) = \begin{cases} \mathrm{sgn}(\omega_M)(2T_{fc}g(\xi) - F_{r0}) \\ \quad : |\delta| < \theta_r \ and \ |F_{rolling}| < T_{fc} \\ \mathrm{sgn}(\omega_M)T_{fc} \\ \quad : |\delta| \geq \theta_r \ or \ |F_{rolling}| \geq T_{fc} \end{cases} \qquad (2)$$

$$\delta = |\theta_M - \delta_0|, \quad \xi = \delta/\theta_r \quad \cdots\cdots\cdots\cdots\cdots\cdots\cdots (3)$$

where n is a coefficient representing the expansion of the hysteresis, sgn ($\cdot$) is a sign function, $\delta$ is a distance of travel after the direction of movement is reversed, Fr0 and $\delta$0 are a rolling friction force and a motor position ($\theta$M) when the direction of movement is reversed. The rolling friction model expresses the dynamic characteristics of rolling friction by calculating a hysteresis curve when the absolute value of the distance of travel is not larger than the non-stable displacement region $\theta$r and in a region where the rolling friction force Frolling ($\delta$) does not reach the Coulomb friction, and the rolling friction model expresses static characteristics when the absolute value of the distance of travel is larger than the non-stable displacement region $\theta$r or in a region where the rolling friction force Frolling ($\delta$) reaches the Coulomb friction, based on the Coulomb friction. The parameter of the rolling friction model is adjusted so as to match with the rolling friction characteristics of an actual device based on a value measured by a constant speed driving test.
Figure 2 is a schematic diagram of a positioning mechanism. A positioning mechanism E has a load 2 on the top of a beam for exciting resonance vibration on a ball screw driving table 1 and the positioning mechanism E simulates a mechanical resonant system experienced in a semiconductor tester and the like. A servo motor 3 is operated by a servo amplifier 4, and a pulse signal of an encoder 5 mounted in the servo motor 3 is captured into the servo amplifier 4 through serial transmission and then is transmitted in parallel to a DSP (digital signal processor) 6 acting as a controller. A motor torque reference calculated by the DSP 6 is output to the servo amplifier 4, and motor driving current is controlled through a current control system and various filters in the servo amplifier 4. Since a torque reference is output and the sensor signal is captured through the servo amplifier 4, the positioning mechanism E including the servo amplifier 4 is controlled by the DSP 6.

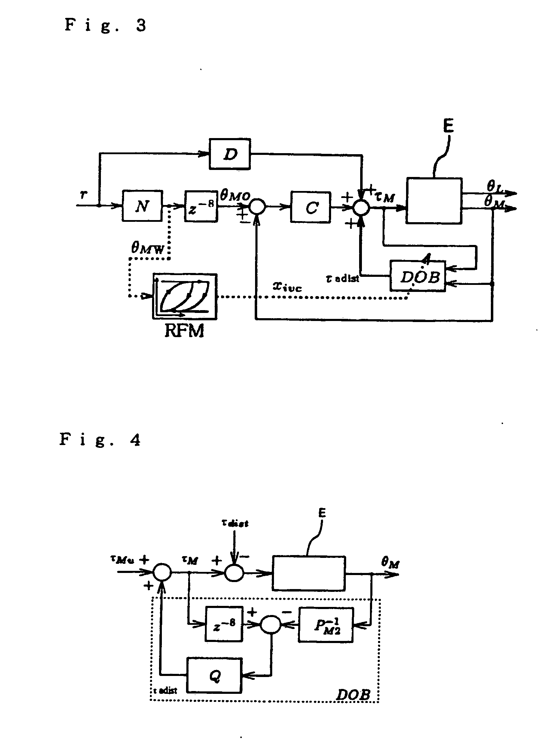

Figure 3 is a block diagram showing a friction compensation control system realized in the DSP 6. A friction compensation control system is a two-degrees-of-freedom control system with a disturbance observer. In Figure 3, r is a load position command, $\theta$M is a motor position, $\theta$L is a load position, $\tau$M is a motor torque reference serving as a control input, τadist is an estimated disturbance, and θMo is a motor position target trajectory. Further, N and D are feedforward compensators based on a coprime factorization description, Z⁻⁸ is a dead time compensation element based on the Smith method, C is a phase lead/lag compensator, and DOB is a disturbance observer acting as a state estimator. In this case, a nominal model used for designing the coprime factorized compensators N and D and the disturbance observer DOB is a two-inertia model PM2 expressed by the following equation (4) handling a primary vibration mode. Table 1 shows an example of each constant of the two-inertia model.

$$P_{M2} = \frac{K_t(J_L s^2 + D_1 s + K_1)}{J_M J_L s^4 + (J_M + J_L)D_1 s^3 + (J_M + J_L)K_1 s^2} \cdots (4)$$

**Table 1**

| | | | | | |
|---|---|---|---|---|---|
| $J_M$ | $7.02 \times 10^{-6}$ | kg m² | $J_L$ | $0.98 \times 10^{-5}$ | kgm² |
| $K_1$ | 2.43 | Nm/rad | $D_1$ | $7.82 \times 10^{-6}$ | Nms/rad |
| $K_2$ | 0.637/3 | Nm/V | | | |

Figure 4 is a block diagram of the disturbance observer DOB. In Figure 4, τMu is an input to an acceleration control system made up of the disturbance observer DOB, τdist is a disturbance, PM2 is the two-inertia model of the above equation (4), Z⁻⁸ is eight sample delay operator based on the Smith method, and Q is a filter for obtaining the proper characteristic of the disturbance observer DOB and determining a disturbance estimation speed. In the present embodiment, the disturbance observer DOB is configured using the filter Q which is made up of a low-pass filter and a notch filter and is expressed by the following equation (5) in consideration of robust stability in a high-frequency region. Table 2 shows an example of the parameter of the notch filter in the filter Q.

$$Q = \left(\frac{\omega_Q}{s + \omega_Q}\right)^2 \cdot \frac{s^2 + 2\zeta_{Qn}\omega_{Qn}s + \omega_{Qn}^2}{s^2 + 2\zeta_{Qd}\omega_{Qd}s + \omega_{Qd}^2} \cdots\cdots (5)$$

**Table 2**

| | | | |
|---|---|---|---|
| $\omega Qn$ | $2\pi \times 560$ rad/s | $\xi Qn$ | 0.05 |
| $\omega Qd$ | $2\pi \times 560$ rad/s | $\xi Qd$ | 0.4 |

In the present embodiment, initial value compensation is performed to the first-order low-pass filter of the filter Q expressed in the above equation (5). When the first-order low-pass filter has an input uivc discretized by bilinear transform with a sampling period Ts and has the output τadist, an output τadist[i] in a sample value system at time i can be expressed by the following equation (6) using present and past input and output.

$$\tau\text{adist}[i] = \frac{1}{a_0}(b_0 u_{ivc}[i] + b_1 u_{ivc}[i-1] - a_1 \tau\text{adist}[i-1]) \cdots (6)$$

where

$$a_0 = \omega_Q T_s + 2, \quad a_1 = \omega_Q T_s - 2$$

$$b_0 = \omega_Q T_s, \quad b_1 = 2\omega_Q T_s$$

Therefore, the initial value compensation of the disturbance observer DOB in the present embodiment is nothing but the provision of an initial value compensation amount xivc for the above equation (6) at sample time i as expressed in the following equation (7). The following will focus on the present control system which is a motor trajectory tracking control system based on a coprime factorization description, and an initial value setting path is set as below:

$$\begin{cases} \tau \mathrm{adist}[i-1] = x_{ivc} \\ u_{ivc}[i] = x_{ivc} \\ u_{ivc}[i-1] = x_{ivc} \end{cases} \quad \cdots\cdots\cdots\cdots\cdots\cdots\cdots\cdots (7)$$

In Figure 3, a dotted line indicates the initial value setting path of the disturbance observer DOB. The initial value setting path acts as transient output means and uses a rolling friction model RFM. In this case, variables θM, ωM, and δ0 in the rolling friction model RFM according to equations (1) to (3) are calculated using an output waveform θMW of the compensator N. Thus the initial value compensation amount xivc can be calculated without being affected by a dead time, sensor noise, and so on. Further, for Fr0 in equation (2), the friction estimation value τadist obtained by the disturbance observer DOB at the just previous positioning/settling is used, so that a rolling friction force can be estimated in consideration of the initial value of a rolling friction force changing in a continuous motion.

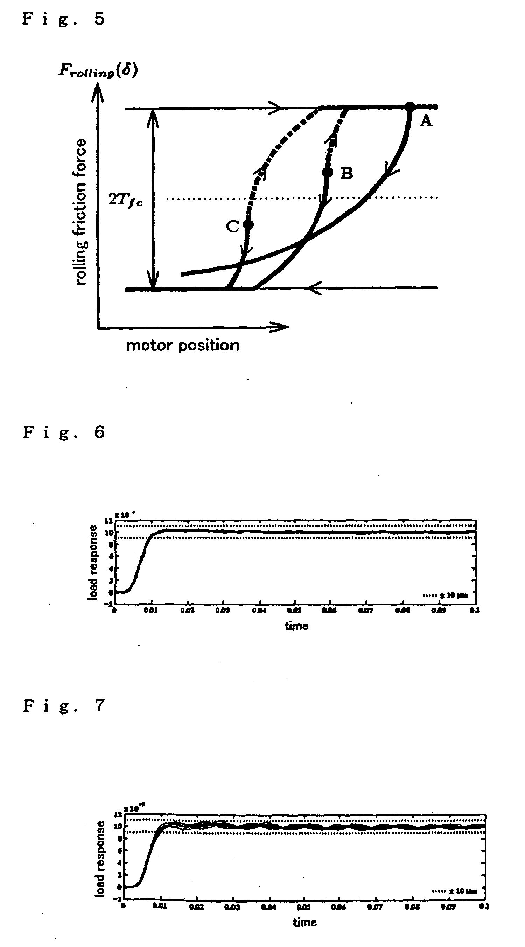

Figure 5 shows the behaviors of the rolling friction force during motions in the reverse direction and the same direction when the initial value Fr0 fluctuates. It is understood that the behaviors of the rolling friction force to be compensated vary according to the initial value Fr0 (points A to C) at the just previous positioning/settling and according to a subsequent motion direction (reverse direction: solid line, the same direction: dotted line). Thus it is expected that positioning response scatters in Bang-Bang compensation using a constant compensation torque which has been used in the prior art.

The initial value compensation aims at improving the performance of friction compensation in a nonlinear spring region during startup, and thus the output value of the rolling friction model is adopted among eight samples during startup in which an effective friction force estimation value cannot be obtained. After that, a method is used in which feedforward compensation is continuously performed on the model output value until the rolling friction model output reaches the Coulomb friction force in a rolling region, and after the rolling friction model output reaches the Coulomb friction force, the feedforward compensation is shifted to compensation control using a typical observer according to the time constant of the filter Q with the Coulomb friction force serving as an initial value. A following equation (8) is an arithmetic expression of the friction compensation initial value configured based on the initial value compensation algorithm of the disturbance observer DOB. Since the initial value compensation is feedforward compensation, modeling errors in the rolling friction affect the position response characteristics but the influence is reduced by the disturbance observer DOB.

$$if \ (1 \le i \le 8) \ or \ (x_{ivc} \le T_{fc})$$
$$\tau udist[i-1] = x_{ivc}$$
$$u_{ivc}[i] = x_{ivc} \qquad \cdots\cdots\cdots (8)$$
$$u_{ivc}[i-1] = x_{ivc}$$
$$end$$

The foregoing initial friction compensation suppresses dispersion in control response and improves control accuracy. The following will discuss experimental results proving this effect. An experiment was conducted using the positioning mechanism of Figure 2. A positioning operation was performed ten consecutive times in the same direction and the response characteristics were evaluated to evaluate dispersion in response, which are frequently experienced in continuous driving, in addition to the high speed and high precision of positioning response characteristics with a 0.1-mm displacement. The disturbance observer was set at $\omega Q = 2\pi \times 400$ rad/s. Figure 6 shows the position response waveform of the load 2 according to the control of the present invention. The position response was quickly settled within a desired precision without exciting resonance vibration. The setting time at this moment was about 9.4 ms and positioning which satisfies desired control specifications was achieved in all of the ten operations and dispersion in response was considerably reduced.

On the other hand, when the initial value was compensated as in Bang-Bang compensation without considering friction dynamic characteristics, as shown in Figure 7, the load position response was within the desired precision at about 9.4 ms but dispersion in response was larger than those of the method of the present invention. The desired precision could not be satisfied several times out of ten consecutive times. Moreover, when the initial value compensation is performed as in Bang-Bang compensation, a step torque of 0.25 V was experimentally given as an initial value compensation torque for eight sample times.

Brief Description of the Drawings

Figure 1 illustrates the nonlinear spring characteristics of rolling friction;
Figure 2 is schematic diagram of a positioning mechanism;
Figure 3 is a block diagram showing a friction compensation control system realized in a digital signal processor;
Figure 4 is a block diagram of a disturbance observer;
Figure 5 illustrates the behaviors of a rolling friction force;
Figure 6 illustrates a load response waveform obtained by control according to the present invention; and
Figure 7 illustrates a load response waveform obtained by control according to the prior art. Description of Symbols

6 ... digital signal processor, N, D ... compensators, E ... positioning mechanism, DOB ... disturbance observer (state estimator).

## Claims

1. A control method of a positioning mechanism (E), comprising steps of:

   performing feedforward compensation control on resonance vibration of the positioning mechanism based on a coprime factorization description of the positioning mechanism; and
   performing feedback compensation control; **characterized in that** feedback compensation control is performed on a dead time and nonlinear friction of the positioning mechanism by a state estimator (DOB); and
   by further comprising the step of
   creating an output of the state estimator from a friction estimation value obtained from a dynamic characteristics model of rolling friction of the positioning mechanism (E) whereby the state estimator (DOB) starts to control the positioning mechanism (E) with an estimation delay.

2. A controller (6) of a positioning mechanism (E), comprising:

a compensator (N,D) for performing feedforward compensation control on resonance vibration of the positioning mechanism based on a coprime factorization description of the positioning mechanism;
**characterized by**
a state estimator (DOB) for performing feedback compensation control on a dead time and nonlinear friction of the positioning mechanism; and
transient output means for creating an output of the state estimator from a friction estimation value obtained from a dynamic characteristics model of rolling friction of the positioning mechanism (E) whereby the state estimator (DOB) starts to control the positioning mechanism (E) with an estimation delay.

## Patentansprüche

1. Steuerverfahren eines Positionierungsmechanismus (E), enthaltend die Schritte:

   Durchführen einer Kompensationsoptimalwertsteuerung einer Resonanzschwingung des Positionierungsmechanismus basierend auf einer Beschreibung einer teilerfremden Faktorzerlegung des Positionierungsmechanismus; und
   Durchführen einer Kompensationsrückkopplungssteuerung;
   **dadurch gekennzeichnet, dass** die Kompensationsrückkopplungssteuerung einer Totzeit und einer nichtlinearen Reibung des Positionierungsmechanismus von einer Zustandsschätzvorrichtung (DOB) durchgeführt wird; und
   **dadurch**, dass weiter die Schritte enthalten sind
   Erzeugen einer Ausgabe der Zustandsschätzvorrichtung aus einem Reibungsabschätzungswert, der aus einem Modell für dynamische Eigenschaften von Rollreibung des Positionierungsmechanismus (E) erhalten wird, wodurch die Zustandsschätzvorrichtung (DOB) beginnt, den Positionierungsmechanismus (E) mit einer Abschätzungsverzögerung zu steuern.

2. Steuerung (6) eines Positionierungsmechanismus (E), enthaltend:

   einen Kompensator (N, D) zum Durchführen einer Kompensationsoptimalwertsteuerung einer Resonanzschwingung des Positionierungsmechanismus basierend auf einer Beschreibung einer teilerfremden Faktorzerlegung des Positionierungsmechanismus;
   **gekennzeichnet durch** eine Zustandsschätzvorrichtung (DOB) zum Durchführen einer Kompensationsrückkopplungssteuerung einer Totzeit und einer nichtlinearen Reibung des Positionierungsmechanismus; und
   transiente Ausgabemittel zum Erzeugen einer Ausgabe der Zustandsschätzvorrichtung aus einem Reibungsabschätzungswert, der aus einem Modell für dynamische Eigenschaften von Rollreibung des Positionierungsmechanismus (E) erhalten wird, wodurch die Zustandsschätzvorrichtung (DOB) beginnt, den Positionierungsmechanismus (E) mit einer Abschätzungsverzögerung zu steuern.

## Revendications

1. Procédé de commande d'un mécanisme de positionnement (E), comprenant les étapes consistant à :

   effectuer une commande de compensation directe sur une vibration de résonance du mécanisme de positionnement en se basant sur une description de la factorisation co-première du mécanisme de positionnement ; et
   effectuer une commande de compensation en réaction ;
   **caractérisé en ce que** la commande de compensation en réaction est effectuée sur un temps mort et un frottement non linéaire du mécanisme de positionnement par un estimateur d'état (DOB) ; et
   comprenant en outre l'étape consistant à créer une sortie de l'estimateur d'état à partir d'une valeur d'estimation du frottement obtenue à partir d'un modèle dynamique de caractéristiques du frottement par roulement du mécanisme de positionnement (E), dans lequel l'estimateur d'état (DOB) commence à commander le mécanisme de positionnement (E) avec un retard d'estimation.

2. Dispositif de commande (6) d'un mécanisme de positionnement (E), comprenant :

   un compensateur (N, D) pour effectuer une commande de compensation directe sur la vibration de résonance du mécanisme de positionnement en se basant sur une description de la factorisation co-première du mécanisme de positionnement ;

**caractérisé par**

un estimateur d'état (DOB) pour effectuer une commande de compensation en réaction sur un temps mort et un frottement non linéaire du mécanisme de positionnement ; et

des moyens de sortie transitoires pour créer une sortie de l'estimateur d'état à partir d'une valeur d'estimation de frottement obtenue à partir d'un modèle dynamique de caractéristiques du frottement par roulement du mécanisme de positionnement (E), dans lequel l'estimateur d'état (DOB) commence à commander le mécanisme de positionnement (E) avec un retard d'estimation.

F i g .  1

F i g .  2

F i g .  3

F i g .  4

F i g . 5

F i g . 6

F i g . 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 8286759 A

**Non-patent literature cited in the description**

• **Maeda ; Kawafuku ; Iwasaki ; Hirai.** Improvement in positioning/settling accuracy by suppressing disturbance. *The Institute of Electrical Engineers of Japan,* 2005, 91-96